# EUROPEAN PATENT APPLICATION

(11) **EP 1 811 412 A1**
(43) Date of publication of application: **25.07.2007**
(21) Application number: 05768379.9
(22) Date of filing: 04.08.2005
(51) Int. Cl.: G06F 19/00

(54) **COMPUTER CONTROL METHOD USING EXTERNALLY CONNECTED DEVICE AND COMPUTER CONTROL SYSTEM**

(71) Applicant: Intelligent Wave Inc., Tokyo 104-0033 (JP)
(72) Inventor: AOKI, Osamu, 1403 CLIO REMINGTON HOUSE ASAGAYA, Tokyo 166-0004 (JP); KAWANO, Hiroaki, Chiba-shi, Chiba 261-0003 (JP); SONODA, Yojiro, Tokyo 166-0015 (JP); IKEDA, Haruko, Ichikawa-shi, Chiba 272-0115 (JP)
(74) Representative: Grünecker, Kinkeldey, Stockmair & Schwanhäusser Anwaltssozietät
(86) International application number: PCT/JP2005/014286
(87) International publication number: WO 2007/015301

(57) **Abstract**

[Object] There is provided a computer control method of allowing, when an operation of a computer is controlled in accordance with an authentication result due to biological information such as a fingerprint or the like using an externally connected device such as a USB memory, a setup of an authentication authority in combination with a plurality of users, and a setup of an authority per application and operation.

[Solution] The authentication condition on a biological authentication needed per application or operation is stored in the externally connected device such as the USB memory along with the biological information of a plurality of users for whom the biological authentication is needed. When a computer in the outside, such as a dispatched company, is used, the externally connected device is connected to this computer to perform the biological authentication, and when a predetermined operation which requests the biological authentication is performed in this computer, a presence of the biometrics is verified according to the authentication condition set to this operation stored in the externally connected device, if the authentication condition is satisfied, the execution of this normal operation is permitted.

## Description

### TECHNICAL FIELD

The present invention relates to a computer control method, and a computer control system for controlling an operation of a computer based on an authentication result due to biological information, such as a fingerprint or the like, using an externally connected device, such as a USB memory.

### BACKGROUND ART

When a computer is used for management of important information in a company or the like, it is widely used to set operating authority to the computer in order to prevent information leakage or the like due to an unauthorized operation of the computer by a third party. As the most common procedure, there is widely used a procedure, in which a password is set to a computer user, and the operating authority is granted only to a user whose personal identification has been authenticated resulting from a match of passwords, but it is difficult to sufficiently eliminate a risk of permitting the unauthorized operation due to password leakage or the like. As a result, biological information, such as a fingerprint, has been increasingly employed in recent years as authentication means with higher safety.

In order to perform the authentication using the biological information, biological information of a user who has given use authority is registered into a computer side in advance, and biological information read from a part of a user' s body by a sensor is compared, in using the computer, with the biological information that has been registered in advance to thereby determine whether or not both of them are matched with each other, so that it is verified whether or not the user is an authorized operator. In this case, when the user having the use authority is fixed for every computer, what is necessary is just to register the biological information into a computer mainframe in advance, whereas it is a closed network, such as an intra-company LAN, what is necessary is just to register the biological information of the user having the use authority in the network into a server for management in advance.

In a stand-alone computer, and a computer used outside the closed network, however, when the user having the authority of using the computer cannot be specified in advance, the operating authority cannot be managed by registering the biological information into the computer in advance as mentioned above. As a technology to deal with such a case, there is disclosed an invention for allowing the biological information to be carried freely by storing the biological information in a USB memory, and allowing the use authority also for the external computer to be managed using a biological authentication (For example, refer to Patent Document 1.).

[Patent Document 1]
Japanese Unexamined Patent Publication (Kokai) No. 2005-128741

### DISCLOSURE OF THE INVENTION

### PROBLEM TO BE SOLVED BY THE INVENTION

According to the invention described in Patent Document 1, it is configured in such a way that by storing fingerprint information of the user having the operating authority in the USB memory, and providing the USB memory with a verification mechanism for the fingerprint, when the computer is operated, the USB memory is connected to the computer, and if the personal identification is authenticated, software possible for the computer operation is sent, so that only a user having the authority can operate the computer.

As described above, according to the invention described in Patent Document 1, the USB memory is delivered for every user who is given the operating authority of the computer, so that it is possible to manage in such a way that only the user having the authority can use the computer. According to this invention, while the operating authority is granted per every user, operations that can control the computer will be limited to a computer start-up and a network connection, which can be controlled by the software or the like sent from the USB memory.

Meanwhile, as an example in which the use authority is desired to be set in the computer outside the closed network which is usually used, following cases may be considered, for example. When a plurality of staffs are dispatched from a certain company to another company, there is assumed a case where all of the staffs can use the computer in the dispatched company, and if a predetermined responsible person is included in the dispatched staffs, it is desired to make the responsible person use software for sales management (for example, a case where only word-processing software can be used when only a registered staff is dispatched, but accounting software can also be used when a manager is included).

In the invention described in the Patent Document 1, however, since the authority is set to every user, it cannot deal with a case where the authority is set in combination with a plurality of users like this case. Additionally, although it can deal with the computer start-up or the control of the network connection, it can not deal with a setup per application such that the word processor software can be used but the accounting software cannot be used like this case, a setup per file such that another certain file can be accessed but a certain file cannot be accessed, and even a setup per operation such that data can be read from a certain file but cannot be written therein.

The present invention is made to solve such a problem, and aims at providing a computer control method and a computer control system for controlling an operation of a computer based on an authentication result due to biological information, such as a fingerprint or the like, using an externally connected device, such as a USB memory or the like, and in particular, a computer control method and a computer control system for allowing for a setup of an authentication authority in combination with a plurality of users, and a setup of authority per application and operation.

### MEANS FOR SOLVING THE PROBLEM

In the present invention, an authentication condition per application and operation is stored in an externally connected device, such as a USB memory connected to a computer along with biological information, such as a fingerprint on a plurality of users, which is used for a biological authentication. The externally connected device is connected in operating the computer, while executing a biological authentication of a targeted user based on the biological information stored in the externally connected device, when starting the computer to logon, when a predetermined application program product is started, and when an agent program product detects a predetermined operation, it is verified whether or not a result of the biological authentication satisfies the authentication condition stored in the externally connected device, so that an execution of logon upon starting the computer, an operation of the application program product, and other predetermined operations are controlled.

Incidentally, while it is required that the above-mentioned biological information and authentication condition are stored in the externally connected device in the present invention, a sensor for reading user's biological information, a program product for an arithmetic processing to compare the biological information, and a processing unit are provided in either of the computer and the externally connected device, but it is not limited thereto. In other words, for the sensor for reading the biological information, either of the sensors provided in the computer (or the other external device connected to the computer) and provided in the externally connected device may be used. Meanwhile, a comparison program product of the biological information may be stored in either of the computer (or an external storage device connected to the computer), and the externally connected device, and the arithmetic processing for comparison may be performed in a main memory of the computer, or may be performed in a dedicated memory provided in the externally connected device.

A first aspect of the present invention to solve the problems is a computer control method of controlling, by connecting an externally connected device capable of storing biological information to a computer, an operation of the computer, wherein the externally connected device stores at least biological information of a plurality of users used for authentication on the computer, and an authentication condition for the user to cause the computer to execute a predetermined operation, the method including the steps of the computer receiving a logon request to the computer, the computer specifying a comparison result between the biological information of the plurality of users stored in the externally connected device, and biological information read from the plurality of users, the computer reading the authentication condition stored in the externally connected device to specify an authentication condition for logging on to the computer among the authentication conditions, and the computer determining whether or not the comparison result matches with the authentication condition for logging on to the computer,
wherein when the comparison result does not match with the authentication condition for logging on to the computer, the computer does not execute a logon processing to the computer.

It can also be characterized in that the externally connected device stores a password set to each of the plurality of users, and the comparison result specified at the step of specifying the comparison result includes a comparison result between the password of each of the plurality of users stored in the externally connected device, and a password inputted by each of the plurality of users, along with the comparison result of the biological information.

It can also be characterized in that the method includes the steps of, when the comparison result matches with the authentication condition for logging on to the computer, the computer requesting an input of a password to the user who has made the logon request, the computer receiving the password inputted by the user, the computer determining whether or not the password matches with the password specified to the user, which is stored in the computer or the externally connected device, wherein when the password received at the step of receiving the password matches with the password specified to the user, the computer executes the logon processing to the computer.

According to the first aspect of the present invention, the biological information, such as fingerprints, of the plurality of users and the authentication condition for logging on to the computer are stored in the externally connected devices, such as a USB memory, thus making it possible to control, upon starting the computer to logon, the use authority of the computer according not only to use authority per user but also to a combination of the authentication results of the plurality of users. In the first aspect of the present invention, logon may be permitted at the timing of having verified the biological authentication defined in the authentication condition, or after the biological authentication is performed after the password authentication for verifying that the password inputted by the user inputted has matched with the password stored in the externally connected device to verify that these authentication results satisfy the authentication condition, logon may be permitted. Alternatively, the password authentication is executed after verifying that the result of the biological authentication satisfies the authentication condition, so that logon may be permitted.

Moreover, the first aspect of the present invention may characterized in that when the logon processing to the computer is executed, the computer stores the comparison result, and the authentication condition read from the externally connected device in a predetermined storage area of the computer, and when the application program product stored in the computer is started, the application program product obtains the authentication condition set to the application program product from the predetermined storage area, and then if the comparison result matches with the authentication condition set to the application program product, the application program product causes the computer to execute a normal processing, whereas if the comparison result does not match with the authentication condition set to the application program product, the application program product causes the computer to execute a processing for imposing a predetermined limitation to the application program product.

Furthermore, the first aspect of the present invention may characterized in that when the logon processing to the computer is executed, the computer stores the comparison result, and the authentication condition read from the externally connected device in a predetermined storage area of the computer, and when an agent program product stored in the computer is started, the agent program product obtains the authentication condition set to the operation from the predetermined storage area, for an operation including at least one of writing or reading a specific file, and writing or reading a specific application, the request of which is received by the computer, and then if the comparison result matches with the authentication condition set for the operation, the agent program product causes the computer to execute a normal processing regarding the operation, whereas if the comparison result does not match with the authentication condition set to the operation, the agent program product causes the computer to execute a processing for imposing a predetermined limitation to the operation.

As described above, the comparison result of the biological information specified upon logon and the authentication condition are stored in the predetermined area of the computer, for example, a main memory, a predetermined file, or the like, thus making it possible to respectively control an operation of the predetermined application after operating the computer, and other predetermined operations such as reading or writing the file by defining a condition for permitting the operation as the authentication condition.

A second aspect of the present invention is a computer control method of controlling, by connecting an externally connected device capable of storing biological information to a computer, an operation of the computer, wherein the externally connected device stores at least biological information of a plurality of users used for authentication on the computer, and an authentication condition for the user to cause the computer to execute a predetermined application program product, the method including the steps of the computer receiving a start of an application program product stored in the computer, the computer specifying a comparison result between the biological information of the plurality of users stored in the externally connected device, and biological information read from the plurality of users, the computer reading the authentication condition stored in the externally connected device to specify an authentication condition set to the application program product among the authentication conditions, and the computer determining whether or not the comparison result matches with the authentication condition set to the application program product, wherein if the comparison result matches with the authentication condition set to the application program product, the computer executes a normal processing regarding the application program product,
wherein if the comparison result does not match with the authentication condition set to the application program product, the computer executes a processing for imposing a predetermined limitation to the application program product.

According to the second aspect of the present invention, the biological information, such as fingerprints of the plurality of users and the authentication condition for limiting the operation of the application program product are stored in the externally connected devices, such as the USB memory, thus making it possible to control, when a predetermined application program product is started on the computer, a range of operating the application program product according to not only use authority per user but also a combination of the authentication results of the plurality of users.

A third aspect of the present invention to solve the problems is a computer control method of controlling, by connecting an externally connected device capable of storing biological information to a computer, an operation of the computer, wherein the externally connected device stores at least biological information of a plurality of users used for authentication on the computer, and an authentication condition for the user to cause the computer to execute a predetermined operation, the method including the steps of the computer receiving a request of an operation including at least one of writing or reading a specific file, and writing or reading a specific application, the computer specifying a comparison result between the biological information of the plurality of users stored in the externally connected device, and biological information read from the plurality of users, the computer reading the authentication condition stored in the externally connected device to specify an authentication condition set to the operation among the authentication conditions, the computer determining whether or not the comparison result matches with the authentication condition set to the operation, wherein if the comparison result matches with the authentication condition set to the operation, the computer executes a normal processing regarding the operation, wherein if the comparison result does not match with the authentication condition set to the operation, the computer executes a processing for imposing a predetermined limitation to the operation.

According to the third aspect of the present invention, the biological information, such as fingerprints, of the plurality of users and the authentication condition for limiting the predetermined operation in the computer are stored in the externally connected devices, such as a USB memory, thus making it possible to control, when the predetermined operation, such as reading, writing the file, or the like is requested to the computer by operating the agent program product corresponding thereto on the computer, whether or not to execute the predetermined operation according to not only use authority per user but also a combination of the authentication results of the plurality of users.

The present invention, corresponding to the computer control methods in accordance with the first through the third aspects, can also be specified as a control system for executing each of the control methods, each including the externally connected device and the computer.

Namely, the computer control system corresponding to the first aspect of the present invention is a computer control system including an externally connected device capable of storing biological information, and a computer connecting the externally connected device, the externally connected device including authentication information storage means for a storing at least biological information of a plurality of users used for authentication on the computer, and an authentication condition for the user to cause the computer to execute a predetermined operation, the computer including logon request receiving means for receiving a logon request to the computer, biological information specifying means for specifying a comparison result between biological information of a plurality of users stored in the externally connected device, and biological information read from the plurality of users, authentication condition specifying means for reading the authentication condition stored in the externally connected device to specify an authentication condition for logging on to the computer among the authentication conditions, and determination means for determining whether or not the comparison result matches with the authentication condition for logging on to the computer, wherein when the comparison result does not match with the authentication condition for logging on to the computer, the computer does not execute a logon processing to the computer.

It can also be characterized in that the authentication information storage means of the externally connected device stores a password set to each of the plurality of users, and the comparison result specified by the biological information specifying means includes a comparison result between the password of each of the plurality of users stored in the authentication information storage means, and a password inputted by each of the plurality of users, along with the comparison result of the biological information.

It can also be characterized in that the computer includes password request means for requesting, when the comparison result matches with the authentication condition for logging on to the computer, an input of a password to the user who has made the logon request, password receiving means for receiving the password inputted by the user, and password determination means for determining whether or not the password matches with the password specified to the user, which is stored in the computer or the externally connected device, wherein if the password received by the password receiving means matches with the password specified to the user, the computer executes the logon processing to the computer.

It may also be characterized in that the computer includes authentication information holding means for storing and holding, when the logon processing to the computer is executed, the comparison result, and the authentication condition read from the externally connected device in a predetermined storage area of the computer, and the application program product stored in the computer obtains, upon starting the application program product, the authentication condition set to the application program product from the predetermined storage area, and then if the comparison result matches with the authentication condition set to the application program product, the application program product causes the computer to execute a normal processing, whereas if the comparison result does not match with the authentication condition set to the application program product, the application program product causes the computer to execute a processing for imposing a predetermined limitation to the application program product.

It may also be characterized in that the computer includes authentication information storage means for storing, when the logon processing to the computer is executed, the comparison result, and the authentication condition read from the externally connected device in a predetermined storage area of the computer, and when the agent program product is started, an agent program product stored in the computer obtains the authentication condition set to the operation from the predetermined storage area, for an operation including at least one of writing or reading a specific file, and writing or reading a specific application, the request of which is received by the computer, and if the comparison result matches with the authentication condition set to the operation, the agent program product causes the computer to execute a normal processing regarding the operation, whereas if the comparison result does not match with the authentication condition set to the operation, the agent program product causes the computer to execute a processing for imposing a predetermined limitation to the operation.

The computer control system corresponding to the second aspect of the present invention is a computer control system including an externally connected device capable of storing biological information, and a computer connecting the externally connected device, the externally connected device including authentication information storage means for a storing at least biological information of a plurality of users used for authentication on the computer, and an authentication condition for the user to cause the computer to execute a predetermined application program product, the computer including application start receiving means for receiving a start of an application program product stored in the computer, biological information specifying means for specifying a comparison result between biological information of a plurality of users stored in the externally connected device, and biological information read from the plurality of users, authentication condition specifying means for reading the authentication condition stored in the externally connected device to specify an authentication condition set to the application program product among the authentication conditions, and authentication condition determination means for the computer to determine whether or not the comparison result matches with the authentication condition set to the application program product, wherein if the comparison result matches with the authentication condition set to the application program product, the computer executes a normal processing regarding the application program product, wherein if the comparison result does not match with the authentication condition set to the application program product, the computer executes a processing for imposing a predetermined limitation to the application program product.

The computer control system corresponding to the third aspect of the present invention is a computer control system comprising an externally connected device capable of storing biological information, and a computer connecting the externally connected device, the externally connected device including authentication information storage means for a storing at least biological information of a plurality of users used for authentication on the computer, and an authentication condition for the user to cause the computer to execute a predetermined operation, the computer including operation request receiving means for receiving a request of an operation including at least one of writing or reading a specific file, and writing or reading a specific application, biological information specifying means for specifying a comparison result between biological information of a plurality of users stored in the externally connected device, and biological information read from the plurality of users, authentication condition specifying means for reading the authentication condition stored in the externally connected device to specify an authentication condition set to the operation among the authentication conditions, and authentication condition determination means for determining whether or not the comparison result matches with the authentication condition set for the operation, wherein if the comparison result matches with the authentication condition set to the operation, the computer executes a normal processing regarding the operation,
wherein if the comparison result does not match with the authentication condition set to the operation, the computer executes a processing for imposing a predetermined limitation to the operation.

### EFFECT OF THE INVENTION

According to the present invention, biological information, such as fingerprints of a plurality of users, and an authentication condition per application or operation are registered into an externally connected device, such as a USB memory or the like, and when executing a predetermined operation on a computer, matching between these authentication conditions is verified, so that a setup of an authentication authority in combination with the plurality of users, and a setup of an authority per application and operation can be achieved.

For example, when a plurality of staffs are dispatched and operate a computer in a dispatched company, the authority can be set according to a combination of the dispatched staffs, and operation contents, such that fingerprint information of the plurality of staffs, or the like are registered into one USB memory to authenticate personal identification, and while only a presence of the authentication of the operator itself is verified in reading and writing a normal file using word-processing software or the like, authentications of not only the operator itself but also a manager among the dispatched staffs are also required upon starting accounting software or the like to access critical information.

### BEST MODES FOR CARRYING OUT THE INVENTION

Hereinafter, the best mode for carrying out the present invention will be described in detail using the drawings. Note herein that embodiments described below are merely examples for carrying out the present invention, and the embodiments, such as a sensor for reading biological information, a configuration of a processing unit for performing an arithmetic processing of a biological authentication, and a timing for verifying whether or not a result of the biological authentication satisfies an authentication condition is not limited to the following examples.

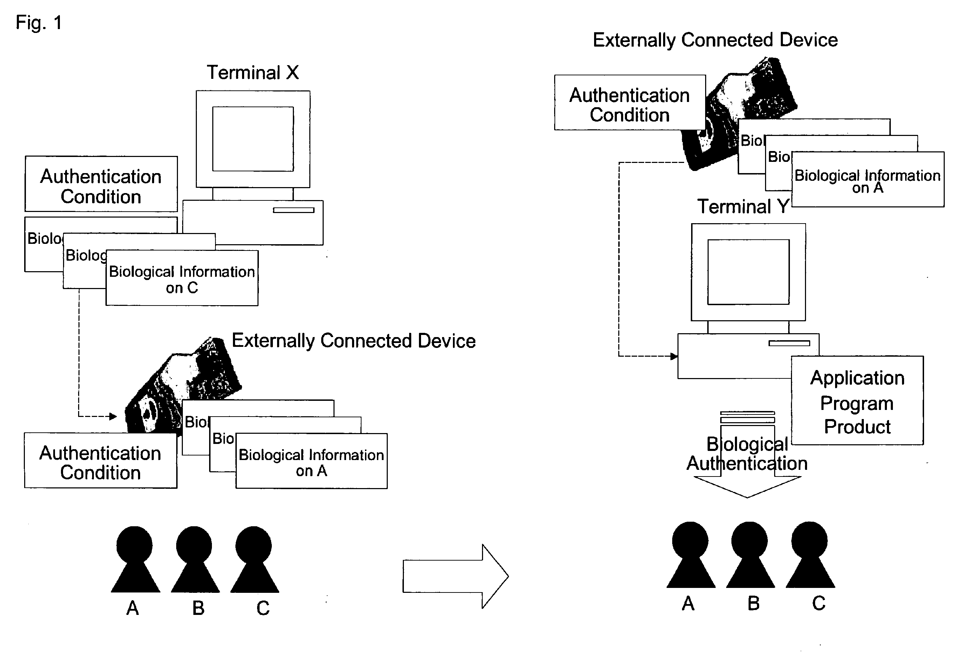

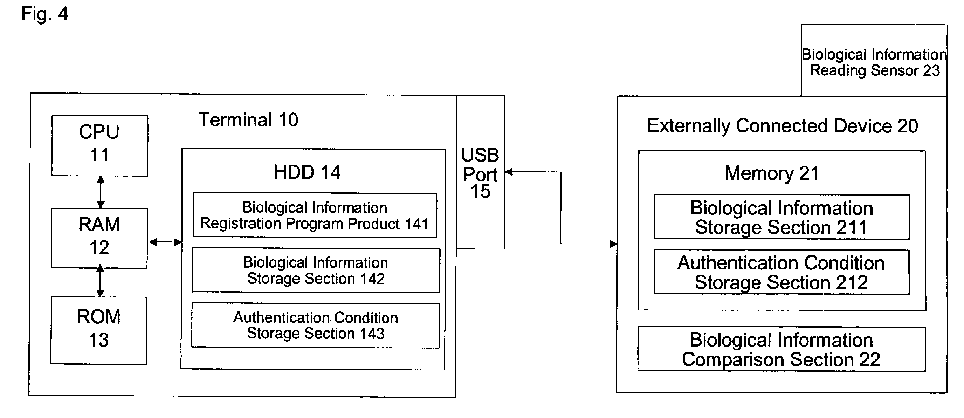

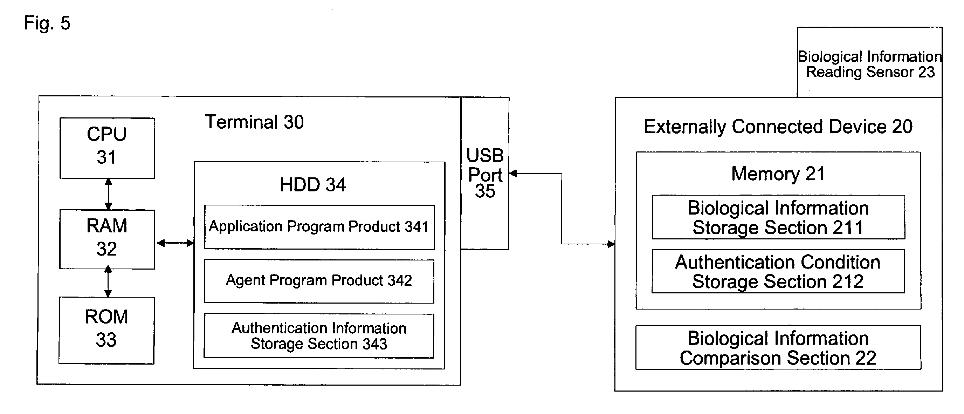

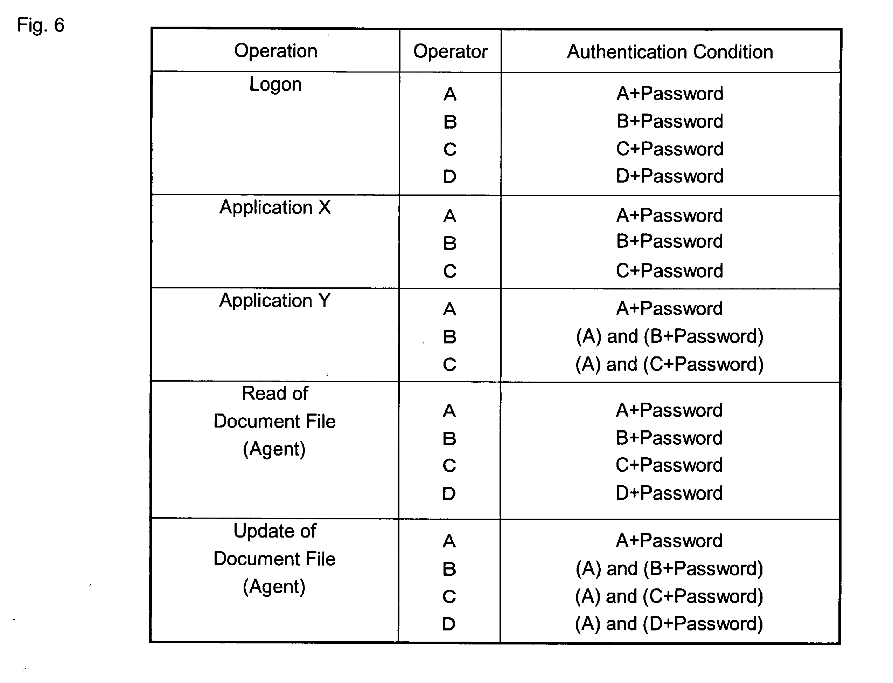

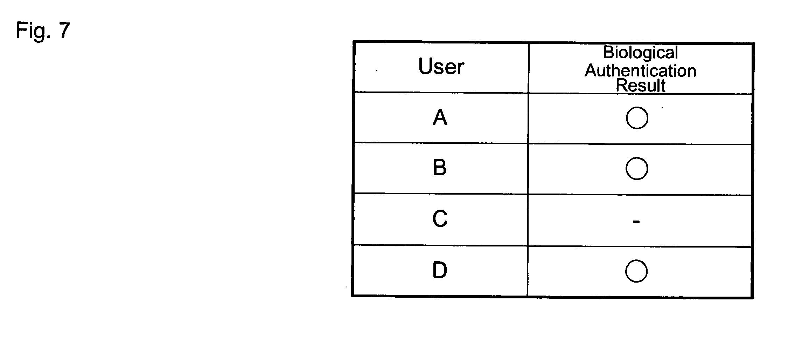

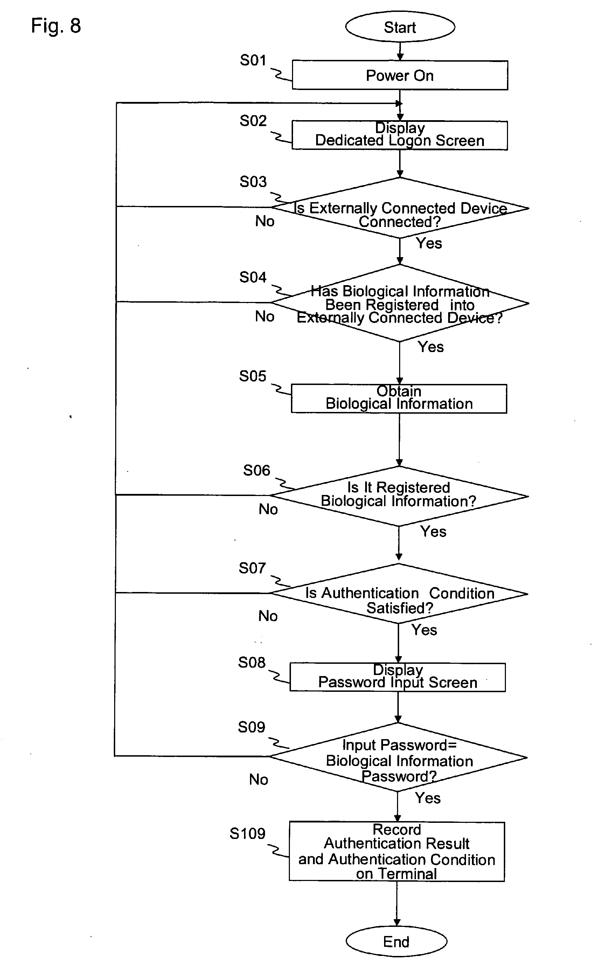

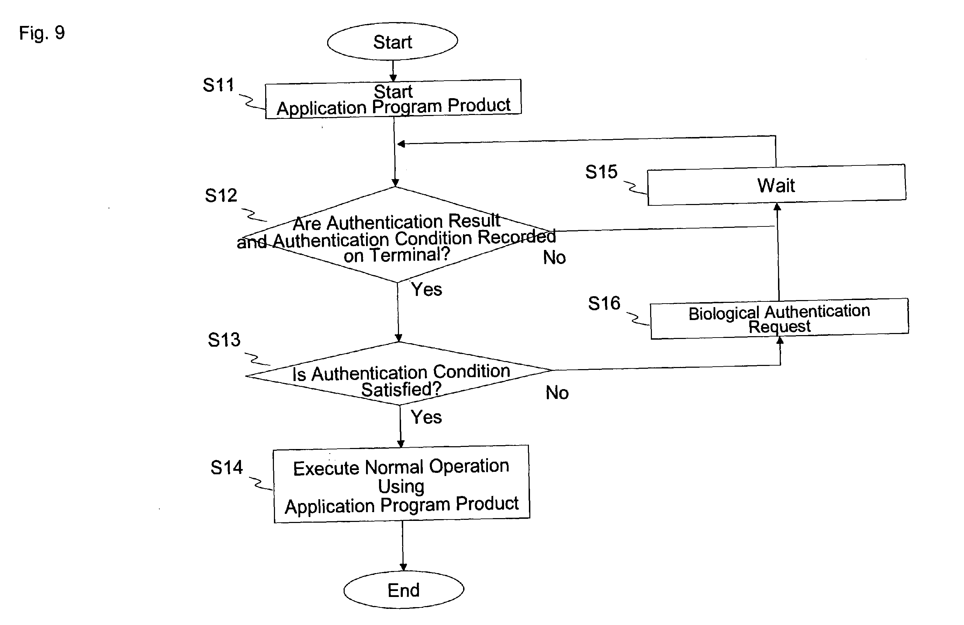

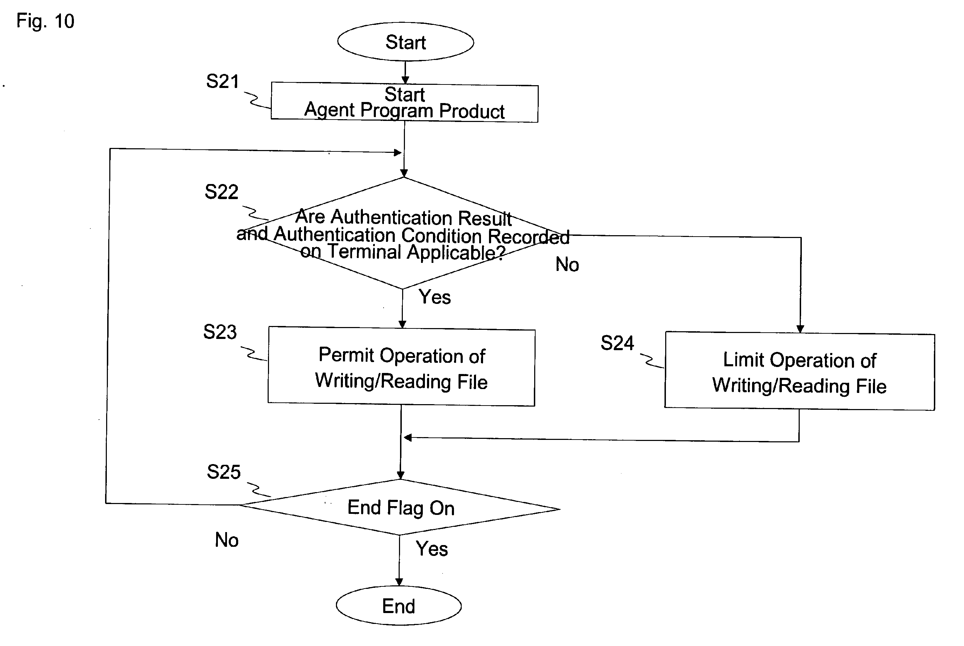

Figs. 1 through 3 are diagrams for respectively illustrating a first through a third embodiments, to which a computer control system in accordance with the present invention is applied. Fig. 4 is a block diagram illustrating a configuration of an externally connected device, and a terminal for registering biological information or the like in order to operate the computer control system in accordance with the present invention. Fig. 5 is a block diagram illustrating a configuration of a computer control system in accordance with the present invention. Fig. 6 is a diagram illustrating an example of the authentication condition stored in the externally connected device in the computer control system in accordance with the present invention. Fig. 7 is a diagram illustrating an example of an authentication result held on memory in the computer control system in accordance with the present invention. Fig. 8 is a flow chart illustrating a process flow for performing an authority verification upon logging on to the computer in the computer control system in accordance with the present invention. Fig. 9 is a flow chart illustrating a process flow for performing the authority verification by the computer upon starting an application in the computer control system in accordance with the present invention. Fig. 10 is a flow chart illustrating a process flow for an agent residing in the computer to perform the authority verification of each operation in the computer control system in accordance with the present invention.

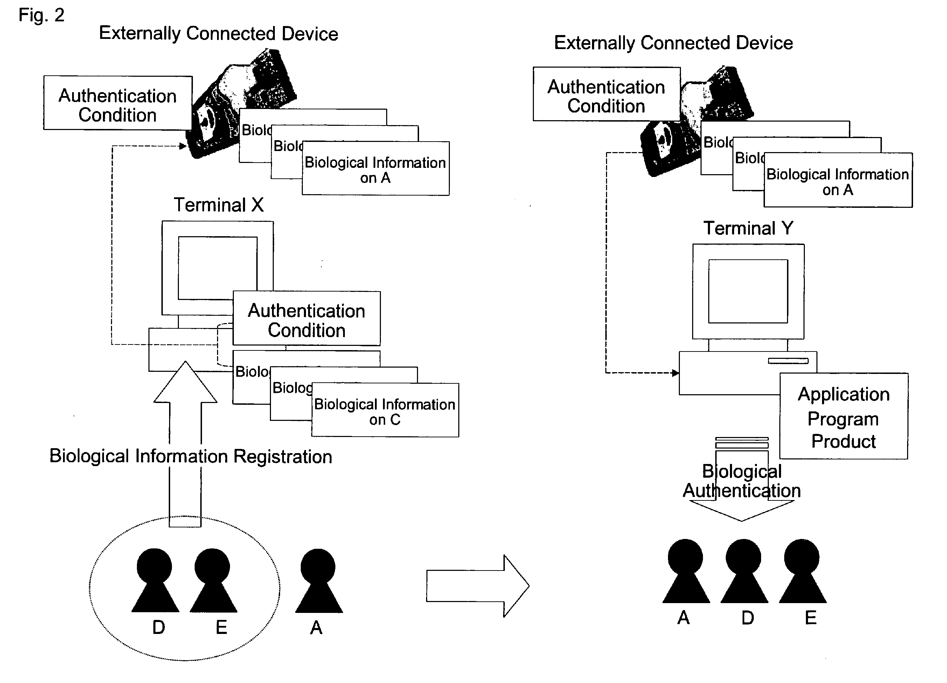

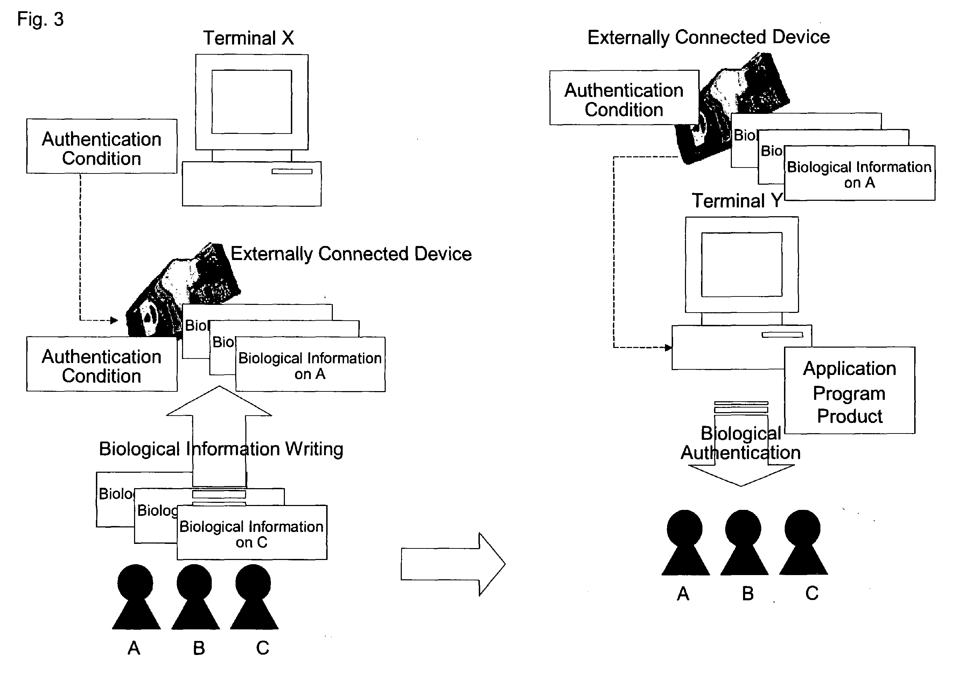

Using Fig. 1 through Fig. 3 there will be described embodiments, in which a use authority of the computer is controlled by performing the biological authentication in an external computer (In these examples, the biological authentication is performed using fingerprint information.) by way of applying the computer control system using an externally connected device in accordance with the present invention. Fig. 1 illustrates an embodiment in which fingerprint information of the user, which is registered into the terminal, is stored in the externally connected device, Fig. 2 illustrates an embodiment in which fingerprint information of the user, which is not registered into the terminal, is registered into the computer, and fingerprint information of the user required for the authentication is then written into the externally connected device, and Fig. 3 illustrates an embodiment in which fingerprint information of the user required for the authentication is directly written into the externally connected device, respectively.

In Fig. 1, it is supposed that a manager A and two registered staffs B and C are dispatched to an external business establishment. A terminal X is installed in a business establishment which dispatches the staffs (dispatch source). A terminal Y used for business is installed in the external business establishment to which the staffs are dispatched (dispatch destination), and it is supposed that biological authentication is requested in order to log on to the terminal Y to operate a predetermined application program product. Fingerprint information of the manager and the registered staffs of the dispatch source is registered into the terminal X, and when dispatching three, A, B, and C, the fingerprint information of three is written in the externally connected device, and it is brought to the business establishment which is the dispatch destination. In the business establishment of the dispatch destination, it is supposed that the externally connected device is connected to the terminal Y, and the biological authentication of each of the manager and staffs is verified and then the terminal Y is operated by them.

When writing the fingerprint information in the externally connected device at the terminal X, the authentication condition for logon and starting the application at the terminal Y is also registered into the externally connected device by operating the terminal X. As an example of the authentication condition, there is set a condition such that "Logon to the terminal Y is permitted for any of staffs A, B, and C if the self biological authentication for them is granted. Starting the predetermined application program product requires, when the registered staffs B and C operate it, for a condition that not only the self authentication thereof but also the biological authentication of the manager A have been granted". As for such condition, a condition registered into the terminal X in advance may be read, or it may be set at every registration by operating the terminal X according to a combination of the members to be dispatched.

When the three A, B, and C are dispatched to the business establishment of the dispatch destination, the externally connected device in which the biological information has been written is connected to the terminal Y, and each of the staffs is subjected to the biological authentication. In order to perform the authentication, while a sensor for reading the fingerprint information of the operator, and a program product for comparing the fingerprint information that has been read with the fingerprint information that has been registered to thereby perform the biological authentication are required, these sensor and program product may be provided in any of the externally connected device and the terminal Y (or a peripheral device connected to the terminal Y).

Upon executing a logon operation from a dedicated screen at the terminal Y, if a connection of the externally connected device is detected, the three of A, B, and C whose fingerprint information is stored in the externally connected device is subjected to the biological authentication. According to the previous example, since self biological authentication should just be performed for the authentication condition upon logon, for example, when the staff B is going to log on, the determination of logon will be made with reference to a result of the biological authentication of the staff B. Meanwhile, when starting the application program product which also requests the biological authentication of the manager A as the authentication condition, an authentication result of the manager A is referred to along with the authentication result of the staff B, and then when personal identifications of both of them have been verified, starting the application will be permitted.

For example, if it is configured in such a way that as using a dedicated USB memory for the externally connected device, a sensor for identifying fingerprints is provided in the USB memory, and a program product for authentication is stored in a part of the memory, management using the biological authentication can be performed even when the terminal Y is not provided with a mechanism of reading or verifying the fingerprint. It may also be configured in such a way that as providing a dedicated chip provided with an arithmetic unit in the USB memory, the biological authentication is performed only by the USB memory without using a main memory and a CPU of the terminal Y. The fingerprint information written in the memory is preferably erasable or rewritable, and the USB memory is preferably provided with sufficient storage capacity so that the processing may be dealt with by one USB memory even when the number of staffs to be dispatched is increased or the number of patterns of the authentication condition is increased.

Note herein that as for the registration of the fingerprint information at the terminal X, when the fingerprint information has not been set in the externally connected device, new fingerprint information may be registered without any limitation in particular, or a certain condition may be set as one of the authentication conditions. Meanwhile, when the fingerprint information of some staffs is set in the externally connected device, it is preferable to prevent the fingerprint information from being illegally changed to be used, and a certain authentication condition may be set to a change or a deletion of the registered fingerprint information, and an addition of new fingerprint information, whereas when any unique conditions are not set at all, on condition that the biological authentication of at least one user among the users whose fingerprint information have been registered is verified and the terminal can be operated, these operations can be executed.

While Fig. 2 is the same as Fig. 1 in that the dispatched manager and staffs are subjected to the biological authentication at the terminal Y in the dispatch destination, it is supposed that two staffs of D and E among three dispatched staffs of A, D, and E are new registration staffs, and the fingerprint information thereof has not been registered into the terminal X. In this case, registration operations of the new fingerprint information on D and E are performed at the terminal X, it is written in the externally connected device along with the fingerprint information of A which has already been registered. The authentication condition is also set by the operation on the terminal X, and is written in the externally connected device.

While Fig. 3 is also the same as Fig. 1 in that the dispatched manager and staffs are subjected to the biological authentication at the terminal Y in the dispatch destination, it is supposed that the fingerprint information is neither registered nor managed at the terminal X, but the fingerprint information of the manager and the staffs to be dispatched is registered at every dispatch. In this case, what is necessary is just to directly write the fingerprint information in the USB memory using, for example, the sensor for identifying fingerprints provided in the USB memory, which has been described in the example of the previous externally connected device. Incidentally, also in this case, the authentication condition is written in the externally connected device by operating the terminal X.

As described using Fig. 1 through Fig. 3, the externally connected device in which not only the biological information but also the authentication condition are registered is used for the authentication by applying the present invention, so that in a case where a plurality of managers and staffs are dispatched to other business establishment and they operate the computer in the dispatch destination, it becomes possible not only to grant the use authority of the computer to an individual based on a presence of the biological authentication, but also to individually set the use authority according to the combination of the plurality of managers and staffs to be dispatched, or according to the operation contents of the computer.

Fig. 4 illustrates a configuration of the externally connected device, and the terminal for registering the biological information or the like in order to operate the computer control system in accordance with the present invention. It is configured so that a terminal 10 for registering the biological information and the authentication condition may be connected to an externally connected device 20. A personal computer or the like is used for the terminal 10, and includes a CPU 11, a RAM 12, a ROM 13, a HDD 14, and a USB port 15. The HDD 14 stores a biological information registration program product 141 for controlling read and write of the biological information, and the biological information, such as the fingerprint information of a user having the use authority of the computer is stored in a biological information storage section 142 in attaching identification information thereto. The authentication condition storage section 143 stores the authentication condition due to the biological authentication required for the operation of each of the computers.

In order to execute a predetermined processing by the biological information registration program product 141 stored in the HDD 14, and other application program product, various basic program products for hardware control, such as an input control, an output control, or the like, which are stored in the ROM 13, are started, and the CPU 11 performs the arithmetic processing while operating the RAM 12 as a work area of the application program product, so that the processing required for each application is executed.

A USB memory or the like is used for the externally connected device 20, which includes a memory 21, a biological information comparison section 22, and a biological information reading sensor 23. At least a biological information storage section 211 and an authentication condition storage section 212 are included in the memory 21, in which the biological information and the authentication condition obtained from the terminal 10 are written. For the biological information, biological information read from the biological information reading sensor 23 may be directly written in the biological information storage section 211. A dedicated chip provided with a function to execute the arithmetic processing for the biological authentication or the like is used for the biological information comparison section 22. The biological information reading sensor 23 is provided with a function to read the biological information, such as the fingerprint information, and is configured so that the read biological information may be compared with the biological information stored in the biological information storage section 211 in the biological information comparison section 22 to thereby perform the biological authentication.

The biological information or the like is written in the externally connected device 20 by connecting the externally connected device 20 to the USB port 15 of the terminal 10. The biological information storage section 142 stores the biological information of a user having the use authority of the computer, in attaching the identification information of registrants, such as an employee code, thereto, and when the identification information of a plurality of members dispatched to the external business establishment is specified among these, the biological information corresponding to the specified identification information is read respectively, and is sent to the externally connected device 20 via the USB port 15. The externally connected device 20 stores each received biological information in the biological information storage section 211 along with the identification information. Note herein that, when the authentication with a password is requested together upon logon to the computer or the like, a password corresponding to each identification information may be stored in the biological information storage section 142 to then be stored in the biological information storage section 211 or the like along with the biological information.

The authentication condition corresponding to the operation contents of the computer operated in the dispatch destination is written in the externally connected device 20 while writing the biological information. While such authentication condition is selected by the operator of the terminal 10, the condition registered into the authentication condition storage section 143 in advance may be selected, or the condition may be set by the individual operation upon writing. The selected authentication condition is sent to the externally connected device 20 via the USB port 15. The externally connected device 20 stores the received authentication condition in the authentication condition storage section 212.

For writing the biological information, not the biological information stored in the terminal 10, but the biological information read by the biological information reading sensor 23 may be directly stored in the biological information storage section 211. Also in this case, however, upon writing the biological information, the externally connected device 20 is connected to the USB port 15 of the terminal 10, and the identification information attached when the read biological information is stored in the biological information storage section 211 is sent from the terminal 10 by the operation of an administrator. The authentication condition and the password sent from the terminal 10 are similarly stored in the authentication condition storage section 212 and the biological information storage section 211, respectively.

Fig. 6 illustrates an example of the authentication condition stored in the externally connected device 20. Conditions, such as a condition for starting a specific application program product and a condition for reading a document file controlled by an agent program product, are specified other than the condition of logging on to the computer. As contents of the authentication condition, conditions on the members for whom the authentications are required are specified using the identification information for specifying each of A, B, C, and D.

In other words, in a case where the authentication condition is set like the example shown in Fig. 6, when any one of A, B, C, or D tries to log on to the computer, that the biological authentication and the password authentication have respectively verified the personal identification becomes a condition to permit the staff to log on. For starting the application program product X, if the biological authentication and the password authentication have verified the personal identifications for A, B, and C, it can be started, but even when the authentication has verified personal identification for D, it cannot be started. For starting the application program product Y, if the biological authentication and the password authentication have verified the personal identification only for A, it can be started, but in order for B and C to start it, it is required that the biological authentication has verified the personal identification for A who is the manager, in addition to the biological authentication and the password authentication of personal identifications for B and C (When B and C who are the staffs operate it, it is used, as a proof mark, in a case where it is necessary for A who is the manager to be subjected to the biological authentication.). For operations of reading and writing the document file using the word-processing software or the like, these operations are monitored by the agent program product, and when matching with a condition specified to each of them, an execution of the operation will be permitted.

As described above, after the biological information or the like is written in the externally connected device 20 at the terminal 10, the staffs move to the business establishment or the like of the dispatch destination having the externally connected device 20 in which writing is completed, with them. A method of the biological authentication in the business establishment or the like of the dispatch destination will be described using Fig. 5.

Fig. 5 illustrates a configuration of the computer control system in accordance with the present invention, in which the control is performed using the biological authentication by connecting the externally connected device. A terminal 30, such as a personal computer or the like is installed in the business establishment or the like of the dispatch destination, the dispatched staff connects the externally connected device 20 brought to the terminal 30. The terminal 30 includes a CPU 31, a RAM 32, a ROM 33, a HDD 34, and a USB port 35, where the HDD 34 stores an application program product 341 and an agent program product 342, and is provided with an authentication information storage section 343.

In order to execute a predetermined processing by the application program product 341 and the agent program product 342 stored in the HDD 34, various basic program products for hardware control, such as an input control, an output control, or the like, which are stored in the ROM 33, are started similar to the case of the terminal 10, and while operating the RAM 32 as a work area of the application program product, the required processing is executed by the CPU 31 performing the arithmetic processing.

When the externally connected device 20 is connected to the terminal 30, the biological authentication of the staff who uses the terminal 30 will be requested at the timing of logon to the terminal 30 and connecting the externally connected device 20. For example, in a case where the four staffs, A, B, C, and D, are dispatched, the biological authentications of the four staffs are requested, and when they make the biological information reading sensor 23 read the biological information, such as the fingerprint information or the like, by respectively specifying the identification information, such as employee codes, it is verified whether or not to match with the corresponding biological information stored in the biological information storage section 211, and then the dispatched staffs are verified whether or not to be registered personal identifications. For a comparison of the biological information, the arithmetic processing is performed in the biological information comparison section 22, but it is not limited to such a configuration, and it may be configured so that, for example, the program product for comparison processing may be stored in the HDD 34 of the terminal 30 to thereby perform the arithmetic processing in the terminal 30. Moreover, other peripheral devices provided with a sensor for reading provided in the terminal 30, and a sensor for reading connected to the terminal 30 may be used instead of the biological information reading sensor 23.

The result of the authentication performed in this way is stored in a virtualized memory area of the RAM 32 or the HDD 34 of the terminal 30. Alternatively, it may be stored in the authentication information storage section 343 in a file form or the like. In any cases, the information which can promptly specify whether or not the personal identification is verified for each of the staffs by the biological authentication will be stored in the terminal 30 in the form shown in the example of Fig. 7. The information on such authentication result may also include the result based on the password authentication.

Additionally, together with the specification of the result of the biological authentication, the authentication condition in executing a predetermined operation is read from the authentication condition storage section 212 of the externally connected device 20 at the terminal 30, and the authentication condition will also be stored similarly in the virtualized memory area in the RAM 32 or the HDD 34, or the authentication information storage section 343, of the terminal 30 in a file form or the like. When performing the predetermined operation at the terminal 30, such authentication condition is referred to, and if the authentication is required, the authentication result is referred to whether or not to satisfy the specified condition, and then if the authentication result satisfies the authentication condition, the execution of the operation will be permitted.

For example, when a condition that the application program product 341 requires the biological authentication is set, a staff for whom the biological authentication is required is specified with reference to the authentication condition stored in the RAM 32, and a result of the biological authentication for the specified staff is verified with reference to the authentication result stored in the RAM 32.

In the examples shown in Fig. 6 and Fig. 7, in a case of B starting the application Y, since it is a condition that the biological authentication of A, and the biological authentication and the password authentication of B have been performed based on the authentication condition, the authentication results of A and B are referred to. Since it is recorded that the biological authentications have been verified for both of the authentication results, B is requested for the password authentication, and then if the passwords match with each other, the application Y will be operated without limitation. Alternatively, if it is defined in the authentication condition that to re-execute the authentication other than the operator's personal identification is required, the biological authentication of A will be required again in addition to the password authentication of B, so that it becomes possible for A who is the manager to verify and check that the operator is B itself on the spot.

Meanwhile, in a case of C starting the application Y, since it is a condition that the biological authentication of A, and the biological authentication and the password authentication of C have been performed based on the authentication condition, the authentication results of A and C are referred to. In this case, since it is not recorded in the authentication result of C that the biological authentication has been performed, the application Y will be stopped, or some operations thereof will be limited. Alternatively, a message of requesting C to perform the biological authentication may be displayed. In a case of D starting the application Y, since D is limited to use the application Y based on the authentication condition, the application Y will be stopped, or some operations thereof will be limited.

Other than the above-mentioned example, in order to control an individual operation, such as reading and writing the file, the agent program product may reside in the terminal 30 to determine, while monitoring the operation, whether or not each operation satisfies the authentication condition. In this case, when the terminal 30 is started, the agent program product 342 is read in the RAM 12 to monitor that a predetermined arithmetic processing is executed in the RAM 12. When the predetermined arithmetic processing, such as an update of the document file, is detected, a manager or a staff for whom the biological authentication is required is specified with reference to the authentication condition stored in the RAM 32, and a result of the biological authentication for the specified manager or staff is verified with reference to the authentication result stored in the RAM 32.

In the examples shown in Fig. 6 and Fig. 7, in a case of B executing the update of the document file, since it is a condition that the biological authentication of A, and the biological authentication and the password authentication of B have been performed based on the authentication condition, the authentication results of A and B are referred to. Since it is recorded that the biological authentications have been verified for both of the authentication results, B is requested for the password authentication, and then if the passwords match with each other, the update of the document file becomes valid. Alternatively, if it is defined in the authentication condition that to re-execute the authentication other than the operator's personal identification is required, the biological authentication of A is requested again in addition to the password authentication of B, and if the password authentication of B and the biological information of A are verified, the update of the document file becomes valid. Also when D executes the update of the document file, it is performed in a manner similar to that described above. Meanwhile, in a case of C executing the update of the same document file, since it is a condition that the biological authentication of A, and the biological authentication and the password authentication of C have been performed based on the authentication condition, the authentication results of A and C are referred to. In this case, since it is not recorded that the biological authentication has been performed for the authentication result of C, the update process of the document file will be stopped, or some operations thereof will be limited. Alternatively, a message of requesting C to perform the biological authentication may be displayed.

Incidentally, for the method of specifying the authentication condition and the authentication result, while the biological authentication of each of the staffs is performed in advance upon logon or the like to thereby store the result in the RAM 12 or the authentication information storage section 343 or the like as described so far, the authentication condition is obtained from the authentication condition storage section 212 upon starting the application program product and the agent program product which require the biological authentication, respectively, so that the comparison processing may be performed by requesting for the biological authentication of the manager and the staff required based on the authentication condition.

Using a flow chart shown in Fig. 8, there will be described a process flow for performing the authority verification upon logging on to the computer in the computer control system in accordance with the present invention. As a premise, it is supposed that a plurality of managers and dispatched staffs bring the externally connected device, in which the authentication condition defining the biological information of each of them and the computer operation is stored, to the business establishment or the like of the dispatch destination to set this externally connected device in the computer provided in the business establishment or the like of the dispatch destination.

When the externally connected device in which the biological information of the plurality of managers and staffs and the authentication condition at the time of the predetermined operation are stored is connected to the computer, and the power of the computer is turned ON (S01), a dedicated logon screen is displayed on a operation screen of the computer (S02). The computer verifies whether or not the externally connected device used for the present invention is connected to the USB port or the like, by the operation of an OS or the like (S03), and then if the externally connected device is connected thereto appropriately, it verifies whether or not the biological information and the authentication condition have been registered (S04). If it is determined that they have been registered, the biological authentication processing will be executed as follows.

In order to verify whether or not a computer operator is the dispatched staff itself, the operator is requested for the biological information to be read, the biological information read from a biological information reading device, such as the biological information reading sensor provided with the externally connected device, is obtained (S05) . The obtained biological information is compared with the biological information registered into the externally connected device (S06), and then if they match with each other, it is verified that the operator is the staff itself (the personal identification is verified).

After the personal identification is verified in this way, it is subsequently verified whether or not to match with the authentication condition for logon registered into the externally connected device (S07). For example, if it is a condition that logon is permitted by only one operator, it matches with the authentication condition, but if the authentication of the manager is also required in addition to the that of the operator, the biological authentication of the manager will be performed in order to verify that the authentication condition is satisfied (or if the biological authentication of the manager has already been completed, the authentication result will be obtained).

When it is verified that the authentication condition is satisfied, a password input screen for logon is displayed (S08) to verify whether or not a password inputted to the computer by the operator and the password specified to this operator, which is stored in the externally connected device along with the biological information match with each other (S09). If they match with each other, the logon processing is continued, and while the authentication result of the biological authentication and the authentication condition read from the externally connected device (for the authentication condition, all the conditions may be read out when the first staff or the like logs on.) are recorded on a temporary storage area, such as a memory of the computer, or the like, the processing will be completed.

Incidentally, when the externally connected device is not connected to the computer, when neither the biological information nor the authentication condition is registered into the externally connected device, when the results of the biological authentications do not match with each other, when the authentication condition is not satisfied even although the biological authentication has been performed, and when the comparison results of the passwords do not match with each other, the logon processing is continued in any cases, and the process will return to the display of the initial dedicated logon screen. In these cases, however, the other processing such as performing an error processing, or requesting for the comparison results when the comparison results do not match with each other may be performed, and it is not limited in particular.

Moreover, in the above-mentioned flow, after performing the biological authentication to verify that the authentication condition is satisfied, the logon screen on which the password input is requested is displayed, but before verifying the matching of the authentication conditions, the password authentication may be performed together with the biological authentication. In this case, which of the biological authentication and the password authentication is performed previously is not limited in particular, and when both match with each other, it will be treated such that the personal identification is authenticated for this staff or the like.

Using a flow chart shown in Fig. 9, there will be described a process flow for performing the authority verification upon starting the application by the computer in the computer control system in accordance with the present invention. Incidentally, as a premise here, it is supposed that the authentication result of the biological authentication performed upon logon to the computer and the authentication condition read from the externally connected device (The authentication condition on the application program product is included.) are stored in a temporary storage area, such as a memory of the computer or the like.

When the computer receives a start of the application program product (S11), it is verified whether or not the authentication result of the biological authentication, and the authentication condition are stored in a predetermined storage area, such as the memory of the computer (S12). If these pieces of information are not stored, the application waits without being executed, until the authentication result and the authentication condition are verified (S15).

If these pieces of information are stored, it is determined whether or not the authentication result satisfies the authentication condition for normally operating the application program product (S13). If the authentication condition is satisfied, the application program product is executed in the normal operation (S14). If the authentication condition is not satisfied, an execution of the biological authentication for satisfying the authentication condition is requested (S16), and the process waits until a new authentication result is verified (S15).

Note herein that, as for the operation when satisfying the authentication condition is not verified, there may be performed another processing, such as performing an error processing while stopping the application program product, operating the application program product in a state where a predetermined limitation is imposed, or the like, other than the processing for normally operating it without any limitations.

The flow shown in Fig. 9 is premised that the biological authentication is performed upon logon to the computer, or the like, and the authentication result stored in the memory or the like is referred to, but while logon to the computer is permitted with the normal password input or the like, the biological authentication may be performed for each of the staffs when the predetermined application program product which requests for the biological authentication is started. In this case, the same processing as the comparison of the biological authentication and the authentication condition (S03 through S07) described in Fig. 8 will be executed upon starting the application program product.

Using a flow chart shown in Fig. 10, there will be described a process flow for an agent residing in the computer to perform the authority verification of each operation in the computer control system in accordance with the present invention. It is premised herein that, similar to the case of Fig. 9, the authentication result of the biological authentication performed upon logon to the computer, and the authentication condition read from the externally connected device (The authentication condition on a predetermined operation that is controlled by the agent program product is included.) are stored in a temporary storage area, such as the memory of the computer or the like.

The agent program product is a program product for monitoring the operation executed by the application program product or the like (such as writing and reading a specific file, writing and reading of a specific application program product, starting a screen saver, or the like), is started after computer start-up or logon (S21), and resides in the computer to monitor data or the like on the memory.

When the agent program product monitors the above-mentioned predetermined operation and detects an execution request of the operation which requires the authentication, it determines whether or not the authentication result of the biological authentication stored in the predetermined storage area, such as the memory of the computer or the like, and the authentication condition are applicable to the operation detected by the agent program product (S22). If it is determined to be applicable, the execution of this normal operation is permitted (S23), whereas if it is determined not to be applicable, a certain limitation will be imposed to the execution of this operation by the agent program product (S24) . The limitation content is not limited in particular, and it may be to stop the execution of the requested operation, or may be to permit the execution under a condition of imposing limitations to a certain function.

The monitor of the predetermined operation by the agent program product like this continues until there is set an end flag for indicating that the monitor by the agent program product is not needed any more, and after it is verified that the end flag is set to ON (S25), monitoring by the agent program product will be completed. Incidentally, it is not limited in particular which program product manages the end flag for such the agent program product.

Also for a flow shown in Fig. 10, it is premised that the biological authentication is performed upon logon to the computer, or the like, and the authentication result stored in the memory or the like is referred to, but while logon to the computer is permitted with the normal password input or the like also in this case, the biological authentication may be performed for each of the managers and staffs at the timing of the agent program product being started. In this case, the same processing as that of the biological authentication and the comparison of the authentication condition (S03 through S07) described in Fig. 8 will be executed upon starting the agent program product.

### BRIEF DESCRIPTION OF THE DRAWINGS

Fig. 1 is a diagram illustrating a first embodiment, to which a computer control system in accordance with the present invention is applied;
Fig. 2 is a diagram illustrating a second embodiment, to which the computer control system in accordance with the present invention is applied;
Fig. 3 is a diagram illustrating a second embodiment, to which the computer control system in accordance with the present invention is applied;
Fig. 4 is a block diagram illustrating a configuration of an externally connected device, and a terminal for registering biological information or the like in order to operate the computer control system in accordance with the present invention;
Fig. 5 is a block diagram illustrating a configuration of a computer control system in accordance with the present invention;
Fig. 6 is a diagram illustrating an example of the authentication condition stored in the externally connected device in the computer control system in accordance with the present invention;
Fig. 7 is a diagram illustrating an example of an authentication result held on memory in the computer control system in accordance with the present invention;
Fig. 8 is a flow chart illustrating a process flow for performing an authority verification in logging on to the computer in the computer control system in accordance with the present invention;
Fig. 9 is a flow chart illustrating a process flow for performing the authority verification by the computer upon starting an application in the computer control system in accordance with the present invention; and
Fig. 10 is a flow chart illustrating a process flow for an agent residing in the computer to perform the authority verification of each operation in the computer control system in accordance with the present invention.

### EXPLANATIONS OF LETTERS OR NUMERALS

- 10: Terminal
- 11: CPU
- 12: RAM
- 13: ROM
- 14: HDD
- 141: Biological information registration program product
- 142: Biological information storage section
- 143: Authentication condition storage section
- 15: USB port
- 20: Externally connected device
- 21: Memory
- 211: Biological information storage section
- 212: Authentication condition storage section
- 22: Biological information comparison section
- 23: Biological information reading sensor
- 30: Terminal
- 31: CPU
- 32: RAM
- 33: ROM
- 34: HDD
- 341: Application program product
- 342: Agent program product
- 343: Authentication information storage section
- 35: USB port

## Claims

1. A computer control method of controlling, by connecting an externally connected device capable of storing biological information to a computer, an operation of the computer, wherein the externally connected device stores at least biological information of a plurality of users used for authentication on the computer, and an authentication condition for the user to cause the computer to execute a predetermined operation, the computer control method comprising the steps of:
the computer receiving a logon request to the computer;
the computer specifying a comparison result between the biological information of the plurality of users stored in the externally connected device, and biological information read from the plurality of users;
the computer reading the authentication condition stored in the externally connected device to specify an authentication condition for logging on to the computer among the authentication conditions; and
the computer determining whether or not the comparison result matches with the authentication condition for logging on to the computer,
wherein when the comparison result does not match with the authentication condition for logging on to the computer, the computer does not execute a logon processing to the computer.

2. The computer control method according to claim 1, wherein
the externally connected device stores a password set to each of the plurality of users, and
the comparison result specified at the step of specifying the comparison result includes a comparison result between the password of each of the plurality of users stored in the externally connected device, and a password inputted by each of the plurality of users, along with the comparison result of the biological information.

3. The computer control method according to claim 1, further comprising the steps of, when the comparison result matches with the authentication condition for logging on to the computer,
the computer requesting an input of a password to the user who has made the logon request,
the computer receiving the password inputted by the user,
the computer determining whether or not the password matches with the password specified to the user, which is stored in the computer or the externally connected device,
wherein when the password received at the step of receiving the password matches with the password specified to the user, the computer executes the logon processing to the computer.

4. The computer control method according to claims 1 to 3, wherein
when the logon processing to the computer is executed, the computer stores the comparison result, and the authentication condition read from the externally connected device in a predetermined storage area of the computer, and
when the application program product stored in the computer is started, the application program product obtains the authentication condition set to the application program product from the predetermined storage area,
wherein if the comparison result matches with the authentication condition set to the application program product, the application program product causes the computer to execute a normal processing,
wherein if the comparison result does not match with the authentication condition set to the application program product, the application program product causes the computer to execute a processing for imposing a predetermined limitation to the application program product.

5. The computer control method according to claims 1 to 3, wherein
when the logon processing to the computer is executed, the computer stores the comparison result, and the authentication condition read from the externally connected device in a predetermined storage area of the computer, and
when an agent program product stored in the computer is started, the agent program product obtains the authentication condition set to the operation from the predetermined storage area for an operation including at least one of writing or reading a specific file, and writing or reading a specific application, the request of which is received by the computer,
wherein if the comparison result matches with the authentication condition set to the operation, the agent program product causes the computer to execute a normal processing regarding the operation,
wherein if the comparison result does not match with the authentication condition set to the operation, the agent program product causes the computer to execute a processing for imposing a predetermined limitation to the operation.

6. A computer control method of controlling, by connecting an externally connected device capable of storing biological information to a computer, an operation of the computer, wherein the externally connected device stores at least biological information of a plurality of users used for authentication on the computer, and an authentication condition for the user to cause the computer to execute a predetermined application program product, the computer control method comprising the steps of:
the computer receiving a start of an application program product stored in the computer;
the computer specifying a comparison result between the biological information of the plurality of users stored in the externally connected device, and biological information read from the plurality of users;
the computer reading the authentication condition stored in the externally connected device to specify an authentication condition set to the application program product among the authentication conditions; and
the computer determining whether or not the comparison result matches with the authentication condition set to the application program product,
wherein if the comparison result matches with the authentication condition set to the application program product, the computer executes a normal processing regarding the application program product,
wherein if the comparison result does not match with the authentication condition set to the application program product, the computer executes a processing for imposing a predetermined limitation to the application program product.

7. A computer control method of controlling, by connecting an externally connected device capable of storing biological information to a computer, an operation of the computer, wherein the externally connected device stores at least biological information of a plurality of users used for authentication on the computer, and an authentication condition for the user to cause the computer to execute a predetermined operation, the computer control method comprising the steps of:
the computer receiving a request of an operation including at least one of writing or reading a specific file, and writing or reading a specific application;
the computer specifying a comparison result between the biological information of the plurality of users stored in the externally connected device, and biological information read from the plurality of users;
the computer reading the authentication condition stored in the externally connected device to specify an authentication condition set to the operation among the authentication conditions; and
the computer determining whether or not the comparison result matches with the authentication condition set to the operation,
wherein if the comparison result matches with the authentication condition set to the operation, the computer executes a normal processing regarding the operation,
wherein if the comparison result does not match with the authentication condition set to the operation, the computer executes a processing for imposing a predetermined limitation to the operation.

8. A computer control system comprising an externally connected device capable of storing biological information, and a computer connecting the externally connected device,
wherein the externally connected device includes authentication information storage means for a storing at least biological information of a plurality of users used for authentication on the computer, and an authentication condition for the user to cause the computer to execute a predetermined operation,
the computer comprising
logon request receiving means for receiving a logon request to the computer,
biological information specifying means for specifying a comparison result between biological information of a plurality of users stored in the externally connected device, and biological information read from the plurality of users,
authentication condition specifying means for reading the authentication condition stored in the externally connected device to specify an authentication condition for logging on to the computer among the authentication conditions, and
determination means for determining whether or not the comparison result matches with the authentication condition for logging on to the computer,
wherein when the comparison result does not match with the authentication condition for logging on to the computer, the computer does not execute a logon processing to the computer.

9. The computer control system according to claim 8, wherein
the authentication information storage means of the externally connected device stores a password set to each of the plurality of users, and
the comparison result specified by the biological information specifying means includes a comparison result between the password of each of the plurality of users stored in the authentication information storage means, and a password inputted by each of the plurality of users, along with the comparison result of the biological information.

10. The computer control system according to claim 8,
the computer including
when the comparison result matches with the authentication condition for logging on to the computer, password request means for requesting an input of a password to the user who has made the logon request,
password receiving means for receiving the password inputted by the user, and
password determination means for determining whether or not the password matches with the password specified to the user, which is stored in the computer or the externally connected device,
wherein if the password received by the password receiving means matches with the password specified to the user, the computer executes the logon processing to the computer.

11. The computer control system according to any one of claims 8 to 10, wherein
the computer includes authentication information holding means for storing and holding, when the logon processing to the computer is executed, the comparison result, and the authentication condition read from the externally connected device in a predetermined storage area of the computer, and
an application program product stored in the computer obtains, when the application program product is started, the authentication condition set to the application program product, from the predetermined storage area,
wherein if the comparison result matches with the authentication condition set to the application program product, the application program product causes the computer to execute a normal processing, and
wherein if the comparison result does not match with the authentication condition set to the application program product, the application program product causes the computer to execute a processing for imposing a predetermined limitation to the application program product.

12. The computer control system according to any one of claims 8 to 10, wherein
the computer includes authentication information storage means for storing, when the logon processing to the computer is executed, the comparison result, and the authentication condition read from the externally connected device in a predetermined storage area of the computer,
an agent program product stored in the computer obtains, when the agent program product is started, the authentication condition set to the operation from the predetermined storage area, for an operation including at least one of writing or reading a specific file, and writing or reading a specific application, the request of which is received by the computer,
wherein if the comparison result matches with the authentication condition set to the operation, the agent program product causes the computer to execute a normal processing regarding the operation,
wherein if the comparison result does not match with the authentication condition set to the operation, the agent program product causes the computer to execute a processing for imposing a predetermined limitation to the operation.

13. A computer control system comprising an externally connected device capable of storing biological information, and a computer connecting the externally connected device,
the externally connected device including authentication information storage means for a storing at least biological information of a plurality of users used for authentication on the computer, and an authentication condition for the user to cause the computer to execute a predetermined application program product,
the computer including
application start receiving means for receiving a start of an application program product stored in the computer,
biological information specifying means for specifying a comparison result between biological information of a plurality of users stored in the externally connected device, and biological information read from the plurality of users,
authentication condition specifying means for reading the authentication condition stored in the externally connected device to specify an authentication condition set to the application program product among the authentication conditions, and
authentication condition determination means for the computer to determine whether or not the comparison result matches with the authentication condition set to the application program product,
wherein if the comparison result matches with the authentication condition set to the application program product, the computer executes a normal processing regarding the application program product,
wherein if the comparison result does not match with the authentication condition set to the application program product, the computer executes a processing for imposing a predetermined limitation to the application program product.

14. A computer control system comprising an externally connected device capable of storing biological information, and a computer connecting the externally connected device,
the externally connected device including authentication information storage means for a storing at least biological information of a plurality of users used for authentication on the computer, and an authentication condition for the user to cause the computer to execute a predetermined operation,
the computer including
operation request receiving means for receiving a request of an operation including at least one of writing or reading a specific file, and writing or reading a specific application,
biological information specifying means for specifying a comparison result between biological information of a plurality of users stored in the externally connected device, and biological information read from the plurality of users,
authentication condition specifying means for reading the authentication condition stored in the externally connected device to specify an authentication condition set to the operation among the authentication conditions, and
authentication condition determination means for determining whether or not the comparison result matches with the authentication condition set to the operation,
wherein if the comparison result matches with the authentication condition set to the operation, the computer executes a normal processing regarding the operation,
wherein if the comparison result does not match with the authentication condition set to the operation, the computer executes a processing for imposing a predetermined limitation to the operation.
